# EUROPEAN PATENT SPECIFICATION

(11) **EP 1 859 674 B1**
(45) Date of publication and mention of the grant of the patent: **14.06.2017**
(21) Application number: 05806139.1
(22) Date of filing: 08.11.2005
(51) Int. Cl.: A01G 13/00

(54) **AGRO-HORTICULTURAL SOIL COVER FILM**
LANDWIRTSCHAFTLICH-GARTENBAULICHE BODENABDECKFOLIE
COUCHE DE COUVERTURE DE SOL AGRO-HORTICOLE

(30) Priority: 18.03.2005 JP 2005079199
(43) Date of publication of application: 28.11.2007
(73) Proprietor: Sumitomo Metal Mining Co., Ltd., Tokyo 105-8716 (JP)
(72) Inventor: YABUKI, Kayo, Sumitomo Metal Mining Co., Ltd., Chiba 2720835 (JP); TAKEDA, Hiromitsu, Sumitomo Metal Mining Co., Ltd., Chiba 2720835 (JP); FUJITA, Kenichi, Sumitomo Metal Mining Co., Ltd., Chiba 270835 (JP); ADACHI, Kenji, Sumitomo Metal Mining Co., Ltd., Chiba 270835 (JP)
(74) Representative: Betten & Resch
(86) International application number: PCT/JP2005/020433
(87) International publication number: WO 2006/100799

(56) References cited:
- DE-A1- 3 501 244
- DE-A1- 19 912 996
- JP-A- 08 059 301
- JP-A- 2002 254 512
- JP-A- 2003 277 634
- JP-U- 59 143 732
- JP-U- 59 143 732
- US-A- 5 925 453

## Description

### TECHNICAL FIELD

The present invention relates to an agro-horticultural soil cover film having a white-light reflection layer that includes a white-light reflecting material, and an infrared light absorption layer that is coated with nanoparticles of an infrared absorption material for absorbing infrared rays from sunlight or other light, wherein the agro-horticultural soil cover film reflects visible light and absorbs infrared light, thereby reflecting light that is needed for plant growth towards the plant side, and absorbing heat-generating infrared light to warm the soil without increasing the temperature of the air inside a greenhouse or the like.

### BACKGROUND ART

Known methods for accelerating the growth of plants include a method for covering a soil surface using a reflection sheet that uses a metal film of aluminum or the like, a sheet for reflecting white light using a film of a white-light reflecting material, a sheet formed by further coating the aforementioned reflection sheet with a reflecting material, or the like. However, these sheets indiscriminately reflect all solar radiation that reaches the ground surface, and although growth of the plants is accelerated, heat-generating infrared light is also reflected, and the temperature of the air inside the greenhouse or the like increases. A reflection sheet that uses an aluminum film or other metal film has such drawbacks as increased cost due to commonly being formed by aluminum vapor deposition.

Synthetic resin sheets made of polyethylene, polyvinyl chloride, or the like are commonly known as sheets used to retain heat in soil. However, these synthetic resin sheets generally have a high transmittance of infrared rays, and therefore have inadequate effectiveness at retaining heat in soil. In order to overcome these drawbacks, a heat retention sheet for covering a ground surface is proposed in Patent Document 1 in which strips of a film having infrared reflecting properties, and strips of a film having infrared absorbing properties are woven together as vertical and horizontal threads, respectively. However, this heat retention sheet also has the drawback of high cost, since the film having infrared reflecting properties is formed by aluminum vapor deposition.

Patent Document 2 discloses a film for cultivating an agricultural crop, in which carbon black or another black color, or blue or another pigment is dispersed in a binder and printed on the surface of a whitening film in which the transmittance of all light is 3.0% or higher, and the diffuse reflectance is 40% or higher. However, since the ratio of the area of the color-coated layer is 1.0 to 60%, and the structure does not efficiently absorb heat-generating near-infrared rays, the soil-heating effects are inadequate.
[Patent Document 1]
   Japanese Laid-open Patent Application No. 9-107815
[Patent Document 2]
   Japanese Laid-open Patent Application No. 55-127946

DE-A1-35 01 244 discloses heat screens that are composed of two tanks (1) and (2) separated by a sheet of air, the tank (1) consisting of a composite material, one face of which is metallised and reflective, the other face being absorbent with respect to radiant heat, the tank (2) consisting of a film transparent to visible radiation and absorbent with respect to radiant heat. The screens can be used as an energy-saving device in horticultural and market-gardening greenhouses.

### DISCLOSURE OF THE INVENTION

### [Problems the Invention Is Intended to Solve]

Therefore, an object of the present invention is to provide an agro-horticultural soil cover film that reflects visible light, supplies the light necessary for plant growth towards the plant side, absorbs infrared light, and warms the soil without increasing the temperature of the air inside a greenhouse or the like.

### [Means for Solving These Problems]

The present invention is defined in claim 1. Preferred embodiments are defined in the dependent claims.

As a result of research, the inventors discovered an agro-horticultural soil cover film having a white-light reflecting layer that includes a white-light reflecting material, and an infrared-light absorption layer that includes nanoparticles of an infrared-absorbing material as defined in claim 1.

Furthermore, it is known that tungsten trioxide and other tungsten oxides that have oxygen deficiency, or composite tungsten oxides in which Na or another positive element is added to tungsten trioxide are materials that are electrically conductive and have free electrons. Since a free electron response to light in the infrared region is suggested by analysis of single crystals and the like of these materials, the inventors discovered a formula for creating a heat absorbing component by forming nanoparticles of at least one of the tungsten oxides and the composite tungsten oxides, setting the particle diameter to 1 nm to 800 nm, and increasing the free electrons in the nanoparticles.

The inventors also discovered that a film manufactured by dispersing the nanoparticles of the heat absorbing material in an appropriate medium absorbs sunlight, particularly light in the near-infrared region, without the use of an optical interference effect, and simultaneously transmits light in the visible light region more efficiently than films created by a spraying method or films created by dry processes such as sputtering, vapor deposition, ion plating, chemical vapor deposition (CVD), and other vacuum film formation methods.

Specifically, a first aspect is an agro-horticultural soil cover film comprising a white-light reflecting layer that includes a white-light reflecting material, and an infrared light absorbing layer that includes nanoparticles of an infrared absorbing material.

A second aspect is the agro-horticultural soil cover film of the first aspect, wherein the white-light reflecting layer is a film into which a white-light reflecting material is dispersed, and the infrared light absorbing layer is formed by coating one side of the film with nanoparticles of an infrared absorbing material.

A third aspect is the agro-horticultural soil cover film of the first aspect, wherein a white-light reflecting material and nanoparticles of an infrared absorbing material are dispersed in a film to form a white-light reflecting layer and an infrared light absorbing layer.

A fourth aspect is the agro-horticultural soil cover film of the first aspect, comprising a white-light reflecting layer formed by coating one side of a film with a white-light reflecting material, and an infrared light absorbing layer formed by coating the white-light reflection layer with nanoparticles of an infrared absorbing material; or a white-light reflecting layer formed by coating one side of a film with a white-light reflecting material, and an infrared light absorbing layer formed by coating the other side of the film with nanoparticles of an infrared absorbing material.

A fifth aspect is the agro-horticultural soil cover film of any of the first through fourth aspects, wherein the white-light reflecting material is at least one material selected from TiO₂, ZrO₂, SiO₂, Al₂O₃, MgO, ZnO, CaCO₃, BaSO₄, ZnS, and PbCO₃.

A sixth aspect is the agro-horticultural soil cover film of any of the first through fifth aspects, wherein the particle diameter of the nanoparticles of the infrared absorbing material is 1 nm to 800 nm.

A seventh aspect is the agro-horticultural soil cover film of any of the first through sixth aspects, wherein the nanoparticles of the infrared absorbing material are at least one of tungsten oxide nanoparticles and composite tungsten oxide nanoparticles.

An eighth aspect is the agro-horticultural soil cover film of the seventh aspect, wherein the tungsten oxide nanoparticles are indicated by the general formula WOₓ (2.45 ≦ X ≦ 2.999).

A ninth aspect is the agro-horticultural soil cover film of the seventh or eighth aspect, wherein the composite tungsten oxide nanoparticles are indicated by the general formula M_{Y}WO_{Z} (0.001 ≦ Y ≦ 1.0, 2.2 ≦ Z ≦ 3.0), and have a hexagonal crystal structure.

A tenth aspect is the agro-horticultural soil cover film of the ninth aspect, wherein the element M is at least one element selected from Cs, Rb, K, Tl, In, Ba, Li, Ca, Sr, Fe, and Sn.

An eleventh aspect is the agro-horticultural soil cover film of any of the first through tenth aspects, wherein the surfaces of the nanoparticles of the infrared absorbing material are coated by an oxide that includes at least one element selected from Si, Ti, Zr, and Al.

A twelfth aspect is the agro-horticultural soil cover film of any of the first through eleventh aspects, wherein the film comprises at least one material selected from polyethylene, polypropylene, polyethylene terephthalate, polyvinyl fluoride, polyvinylidene fluoride, polytetrafluoroethylene, tetrafluoroethylene-ethylene copolymer, polychlorotrifluoroethylene, tetrachlorotrifluoroethylene, polyvinyl chloride, polyvinylidene chloride, polyvinyl alcohol, polystyrene, ethylene vinyl acetate, and polyester resin.

### [Effect of the Invention]

The agro-horticultural soil cover film of the present embodiment is a film having a white-light reflecting layer that includes a white-light reflecting material, and an infrared light absorbing layer that includes nanoparticles of an infrared absorbing material as defined in claim 1. Specifically, the agro-horticultural soil cover film of the present embodiment has a structure in which the white-light reflecting layer is a film into which a white-light reflecting material is dispersed, and the infrared light absorbing layer is formed by coating one side of the film with said nanoparticles of an infrared absorbing material. Alternatively, the agro-horticultural soil cover film is a film in which a white-light reflecting material and said nanoparticles of an infrared absorbing material are dispersed in a film to form a white-light reflecting layer and an infrared light absorbing layer. Alternatively, the agro-horticultural soil cover film is a film comprising a white-light reflecting layer formed by coating one side of a film with a white-light reflecting material, and an infrared light absorbing layer formed by coating the white-light reflection layer with said nanoparticles of an infrared absorbing material; or a white-light reflecting layer formed by coating one side of a film with a white-light reflecting material, and an infrared light absorbing layer formed by coating the other side of the film with said nanoparticles of an infrared absorbing material.

An infrared light absorbing layer that includes said nanoparticles of an infrared absorbing material, at least one of tungsten oxide nanoparticles and composite tungsten oxide nanoparticles, is formed by such a simple method as described above, whereby a durable, low-cost agro-horticultural soil cover film can be provided that reflects visible light rays and efficiently absorbs near-infrared rays from sunlight using a small amount of nanoparticles.

Using this film on a ground surface in which plants or the like are cultivated has the effects of increasing the temperature of the covered ground surface and warming the soil without increasing the temperature of the air inside a greenhouse or the like. The film also has the effects of reflecting light in the visible region that is needed for plant growth, and accelerating plant growth, and is extremely useful.

### BEST MODE FOR CARRYING OUT THE INVENTION

Preferred embodiments for implementing the present invention will next be described based on the drawings, but the present invention is in no way limited by the embodiments.

The agro-horticultural soil cover film of the present embodiment has a white-light reflecting layer that includes a white-light reflecting material, and an infrared light absorbing layer that includes nanoparticles of an infrared absorbing material as defined in claim 1, and the film has the characteristics of high diffuse reflectance of light in the visible light region, and high absorption of light in the infrared region.

Sunlight that reaches the ground surface is generally considered to have a wavelength of approximately 290 to 2100 nm, and the light in the visible light wavelength region of approximately 380 to 780 nm is necessary for plant growth. Accordingly, a preferred configuration is one in which the light that is necessary for plant growth is reflected towards the plant side, and heat-generating infrared light is absorbed to warm the soil without increasing the temperature of the air inside the greenhouse, by reflecting light in the visible wavelength region of approximately 380 to 780 nm, and selectively and efficiently absorbing only the near-infrared light that has a wavelength of approximately 780 to 2100 nm.

The agro-horticultural soil cover film of the present embodiment is specifically obtained by adopting a configuration in which the white-light reflecting layer is a film into which a white-light reflecting material is dispersed, and the infrared light absorbing layer is formed by coating one side of the film with said nanoparticles of an infrared absorbing material. The agro-horticultural soil cover film is also obtained by adopting a configuration in which the white-light reflecting material and the nanoparticles of the infrared absorbing material are dispersed in a film to form the white-light reflecting layer and the infrared light absorbing layer. The agro-horticultural soil cover film is also obtained by adopting a configuration that has a white-light reflecting layer formed by coating one side of a film with a white-light reflecting material, and an infrared light absorbing layer formed by coating the white-light reflection layer with said nanoparticles of an infrared absorbing material; or a white-light reflecting layer formed by coating one side of a film with a white-light reflecting material, and an infrared light absorbing layer formed by coating the other side of the film with said nanoparticles of an infrared absorbing material.

Solar heat from sunlight is absorbed by the nanoparticles of the infrared absorbing material in the agro-horticultural soil cover film described above, whereby the infrared rays are absorbed by the film, and the film temperature increases. This temperature increase is accompanied by an increase in radiant heat, and the temperature in the covered soil rapidly increases, but the temperature of the air inside the greenhouse does not increase. Since visible light rays are also reflected by the white-light reflecting material, the amount of photosynthesis is increased by the increased amount of light that reaches the plant, and growth of the plant can be accelerated.

Methods for applying the nanoparticles of the infrared absorbing material of the present embodiment include a method whereby an infrared light absorbing layer in which the abovementioned nanoparticles are dispersed in an appropriate medium formed by coating is formed on a desired substrate surface. Since nanoparticles of the infrared absorbing material obtained by baking at a high temperature in advance can be kneaded into a film substrate or bonded to a substrate surface through the use of a binder, this method has the advantages of being applicable to a resin material or other substrate material having a low heat resistance temperature, and of being inexpensive and not needing a large-scale device for forming the film.

The nanoparticles of the infrared absorbing material of the present embodiment are a conductive material, and therefore pose a risk of interfering with radio waves of mobile telephones and the like by absorbing and reflecting the waves when the nanoparticles of the infrared absorbing material are continuously formed into a continuous film. However, when the infrared absorbing material is formed into nanoparticles and dispersed in a matrix, each grain is dispersed in an independent state, and radio transparency and versatility can therefore be demonstrated.

As described above, a thin film in which the nanoparticles of the infrared absorbing material are dispersed in a medium can be formed by a process in which nanoparticles of the infrared absorbing material are dispersed in an appropriate solvent, and a binder is added to the resultant mixture, after which the surface of a film substrate is coated with the mixture, the solvent is evaporated, and the resin is cured by a prescribed method, for example, in a case in which one side of a film into which the white-light reflecting material is dispersed is coated with the nanoparticles of the infrared absorbing material to form the infrared light absorbing layer, a case in which one side of a film substrate is coated with the white-light reflecting material to form the white-light reflecting layer, and the white-light reflecting layer is coated with the nanoparticles of the infrared absorbing material to form the infrared light absorbing layer, or a case in which one side of a film substrate is coated with the white-light reflecting material to form the white-light reflecting layer, and the other side is coated with the nanoparticles of the infrared absorbing material to form the infrared light absorbing layer.

The method for coating the surface of the film substrate is not particularly limited insofar as the surface of the film substrate can be uniformly coated with the resin that includes said nanoparticles of the infrared absorbing material, and examples of the coating method may include bar coating, gravure coating, spray coating, dip coating, flow coating, spin coating, roll coating, screen printing, blade coating, and other methods. A dispersion obtained by directly dispersing the nanoparticles of the infrared absorbing material in the binder resin is environmentally and industrially preferred, because there is no need to evaporate the solvent after application to the surface of the film substrate.

A UV-curable resin, a heat-curable resin, an electron-curable resin, a room-temperature-curing resin, a thermoplastic resin, or the like, for example, can be selected according to the purpose as the abovementioned resin binder.

Specific examples of this resin binder include polyethylene resin, polyvinyl chloride resin, polyvinylidene chloride resin, polyvinyl alcohol resin, polystyrene resin, polypropylene resin, ethylene vinyl acetate copolymer, polyester resin, polyethylene terephthalate resin, fluororesin, polycarbonate resin, acrylic resin, and polyvinyl butyral resin. A binder that uses a metal alkoxide may also be used. Alkoxides of Si, Ti, Al, Zr, and the like are typical examples of the abovementioned metal alkoxide. A binder in which these metal alkoxides are used can form an oxide film by hydrolysis and heating.

As described above, the nanoparticles of the infrared absorbing material may be dispersed into a film substrate in which the white-light reflecting material is dispersed. The nanoparticles may be dispersed into the substrate by impregnation from the substrate surface, or the nanoparticles of the infrared absorbing material may be mixed with the substrate resin after the temperature is increased to or above the melting point of the substrate to melt the substrate. A master batch may be manufactured in which a high concentration of the nanoparticles is included in advance in the resin starting material of the substrate, and the master batch may be diluted to adjust to a prescribed concentration. The resin that includes the nanoparticles of the infrared absorbing material obtained in this manner may be formed into a film by a prescribed method and applied as the infrared absorbing material.

The method for manufacturing the master batch is not particularly limited, but a mixture in which the abovementioned nanoparticles are uniformly dispersed in a thermoplastic resin can be prepared, for example, by uniformly melt-mixing a liquid dispersion of at least one of tungsten oxide nanoparticles and composite tungsten oxide nanoparticles with grains or pellets of a thermoplastic resin, and other additives as needed using a ribbon blender, a tumbler, a Nauta mixer, a Henschel mixer, a super mixer, a planetary mixer, or other mixer, as well as a Banbury mixer, a kneader, a roller, a kneader-ruder, a single-screw extruder, a twin-screw extruder, or other kneading machine while removing the solvent.

A mixture in which the abovementioned nanoparticles are uniformly dispersed in the thermoplastic resin can also be prepared using a method whereby the solvent in the liquid dispersion of at least one of tungsten oxide nanoparticles and composite tungsten oxide nanoparticles is removed by a publicly known method, and the resultant powder, grains or pellets of the thermoplastic resin, and other additives as needed are uniformly melt-mixed. It is also possible to use a method whereby the powder of at least one of tungsten oxide nanoparticles and composite tungsten oxide nanoparticles is directly added to the thermoplastic resin and uniformly melt-mixed.

A master batch that includes the heat-absorbing component can be obtained by kneading the mixture obtained by the method described above in a single-screw or twin-screw vented extruder, and forming pellets of the mixture.

The method for dispersing the abovementioned nanoparticles of the infrared absorbing material in the resin is not particularly limited, and ultrasonic dispersion, a media mixing mill, a ball mill, a sand mill, or the like, for example, may be used.

The medium for dispersing the abovementioned nanoparticles of the infrared absorbing material is not particularly limited, and can be selected according to the admixed medium resin binder. For example, water, alcohols, ethers, esters, ketones, aromatic compounds, and various other types of common organic solvents may be used. An acid or alkali may also be added as needed to adjust the pH. Furthermore, various types of surfactants, coupling agents, and the like may also be added in order to even further enhance the dispersion stability of the nanoparticles of the infrared absorbing material.

The white-light reflecting material used in the agro-horticultural soil cover film of the present embodiment is not particularly limited, but TiO₂, ZrO₂, SiO₂, Al₂O₃, MgO, ZnO, CaCO₃, BaSO₄, ZnS, PbCO₃, and the like are preferred. These white-light reflecting materials may be used singly or in combinations of two or more types thereof.

The infrared absorbing material for absorbing light in the infrared region that is used in the agro-horticultural soil cover film of the present embodiment will next be described in detail.

The nanoparticles of the infrared absorbing material used in the agro-horticultural soil cover film of the present embodiment are capable of absorbing the desired infrared light.

The infrared-absorbing nanoparticles used in the present embodiment are at least one of tungsten oxide nanoparticles indicated by the general formula WOₓ (2.45 ≦ X ≦ 2.999) and composite tungsten oxide nanoparticles that have a hexagonal crystal structure and are indicated by the general formula M_{Y}WO_{Z} (0.001 ≦ Y ≦ 1.0, 2.2 ≦ Z = 3.0). The abovementioned tungsten oxide nanoparticles or composite tungsten oxide nanoparticles function effectively as a heat (infrared) absorbing component when applied in various types of films.

Examples of the abovementioned tungsten oxide nanoparticles indicated by the general formula WO_{X} (2.45 ≦ X = 2.999) may include W₁₈O₄₉, W₂₀O₅₈, W₄O₁₁, and the like. When the value of X is 2.45 or higher, the occurrence of extraneous crystal phases of WO₂ in the infrared absorbing material can be completely prevented, and chemical stability can be obtained in the material. When the value of X is 2.95 or less, an adequate amount of free electrons is generated, and an efficient infrared absorbing material is obtained. Such a WO_{X} compound in which X is in the range of 2.45 ≦ X ≦ 2.95 is included as a so-called Magneli phase compound.

Examples of composite tungsten oxide nanoparticles that have a hexagonal crystal structure and are indicated by the general formula M_{Y}WO_{Z} (0.001 ≦ Y ≦ 1.0, 2.2 ≦ Z ≦ 3.0) include composite tungsten oxide nanoparticles in which the M element includes at least one element selected from Cs, Rb, K, Tl, In, Ba, Li, Ca, Sr, Fe, and Sn.

The additive element M is preferably added in a ratio from 0.001 to 1.0, and more preferably about 0.33. The reason for this is that the value theoretically calculated from the hexagonal crystal structure is 0.33, and preferred optical characteristics are obtained when the added amount is near this value. The formulae Cs_{0.33}WO₃, Rb_{0.33}WO₃, K_{0.33}WO₃, Ba_{0.33}WO₃, and the like can be cited as typical examples, but useful heat absorption characteristics can be obtained insofar as Y and Z are within the abovementioned ranges.

The nanoparticles of at least one of tungsten oxide and composite tungsten oxide of the present embodiment significantly absorb light in the near-infrared region, particularly light in the 900 to 2000 nm region, and the transmitted hue thereof is therefore most often blue to green.

Various grain sizes for the grains of the infrared absorbing material may be selected according to the purpose for which the grains are used. A grain size of 800 nm or less is preferred when transparency is maintained. The reason for this is that grains that are smaller than 800 nm do not completely block light due to scattering, and transparency can be efficiently maintained while maintaining visibility in the visible light region. Scattering by the grains is preferably further taken into account particularly when transparency in the visible light region is emphasized.

When reduction of scattering by the grains is emphasized, the grain size is preferably 200 nm or less, and more preferably 100 nm or less. The reason for this is that when the grain size is small, scattering of light in the visible light region of 400 to 780 nm due to geometric scattering or Mie scattering is reduced, and as a result, the infrared absorbing film can be prevented from becoming like frosted glass and not clearly transparent. Specifically, when the grain size is 200 nm or less, the abovementioned geometric scattering or Mie scattering is reduced into the Rayleigh scattering region, and since the scattered light is reduced in inverse proportion to the sixth power of the grain size in Rayleigh scattering, a reduction in grain size is accompanied by a reduction in scattering, and transparency is enhanced. A grain size of 100 nm or less is preferred, because there is very little scattered light. A small grain size is preferred in terms of preventing light scattering, and industrial manufacturing is facilitated by a grain size of 1 nm or larger.

It is preferred from the perspective of durability of the infrared absorbing material that the surfaces of the nanoparticles that constitute the infrared absorbing material used in the agro-horticultural soil cover film of the present embodiment be coated by an oxide that includes at least one element selected from Si, Ti, Zr, and Al. These oxides are fundamentally transparent and do not reduce the transmittance of visible light when added. The coating method is not particularly limited, but the surfaces of the nanoparticles of the infrared absorbing material can be coated by adding an alkoxide of the abovementioned metals to a solution in which the nanoparticles of the infrared absorbing material are dispersed.

The film used in the agro-horticultural soil cover film of the present embodiment is not particularly limited, and examples thereof include polyethylene, polypropylene, polyethylene terephthalate, polyvinyl fluoride, polyvinylidene fluoride, polytetrafluoroethylene, tetrafluoroethylene-ethylene copolymer, polychlorotrifluoroethylene, tetrachlorotrifluoroethylene, polyvinyl chloride, polyvinylidene chloride, polyvinyl alcohol, polystyrene, ethylene vinyl acetate, and polyester resin. Stabilizers, stabilizing auxiliaries, antioxidants, plasticizers, lubricants, ultraviolet absorbers, and other additives may be added to the abovementioned resins.

The agro-horticultural soil cover film of the present embodiment thus configured is a film having a white-light reflecting layer that includes a white-light reflecting material, and an infrared light absorbing layer that includes nanoparticles of an infrared absorbing material. A durable, inexpensive agro-horticultural soil cover film that reflects visible light rays and efficiently absorbs near-infrared rays from sunlight using a small amount of the nanoparticles can be provided by forming an infrared light absorbing layer that includes nanoparticles of an infrared absorbing material, preferably at least one of tungsten oxide nanoparticles and composite tungsten oxide nanoparticles, according to a simple method.

Using this film on a ground surface in which plants or the like are cultivated has the effects of increasing the temperature of the covered ground surface and warming the soil without increasing the temperature of the air inside a greenhouse or the like. The film also has the effects of reflecting light in the visible region that is needed for plant growth, and accelerating plant growth, and is extremely useful.

### Examples

The present invention will be described in further detail hereinafter using examples and comparative examples. However, the present invention is in no way limited by the examples described below.

### (Example 1)

Nanoparticles of Cs_{0.33}WO₃ (specific surface area: 20 m²/g) in the amount of 10 weight parts, 80 weight parts of toluene, and 10 weight parts of a dispersing agent for dispersing nanoparticles were mixed together, dispersion was performed using a media stirring mill, and a liquid dispersion of Cs_{0.33}WO₃ nanoparticles having an average dispersed grain size of 80 nm was created (solution A). This solution A in the amount of 50 weight parts and 30 weight parts of a UV-curable resin (solid content: 100%) for hard coating were mixed to form a liquid dispersion of nanoparticles of the infrared absorbing material. The liquid dispersion of nanoparticles of the infrared absorbing material was applied to a polyethylene film including TiO₂ nanoparticles as a white-light reflecting material using a bar coater, and a film was formed. The film was dried for 30 seconds at 60°C to evaporate the solvent, and then cured using a high-pressure mercury lamp to obtain an infrared absorbing film having a high diffuse reflectance in the visible light region.

The diffractive characteristics of the resultant film were measured according to the transmittance of light having a wavelength of 200 to 2100 nm using a spectrophotometer manufactured by Hitachi Seisakusho, and the visible light transmittance, the sunlight transmittance, the visible light reflectance, the sunlight reflectance, and the sunlight absorbance were computed in accordance with JIS A 5759. (The sunlight absorbance herein was computed using the following equation: Sunlight Absorbance (%) = 100% - Sunlight Transmittance (%) - Sunlight Reflectance (%).)

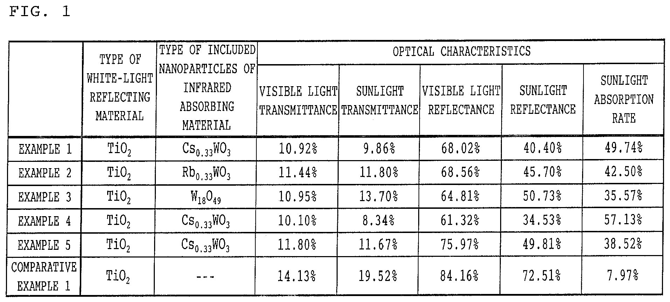

The results are shown in FIG. 1. FIG. 1 shows all of the results obtained in Examples 2 through 5 and Comparative Example 1 described below.

### (Example 2)

Nanoparticles of Rb_{0.33}WO₃ (specific surface area: 20 m²/g) in the amount of 10 weight parts, 80 weight parts of toluene, and 10 weight parts of a dispersing agent for dispersing nanoparticles were mixed together, dispersion was performed using a media stirring mill, and a liquid dispersion of Rb_{0.33}WO₃ nanoparticles having an average dispersed grain size of 80 nm was created (solution B). This solution B in the amount of 50 weight parts, 30 weight parts of a UV-curable resin (solid content: 100%) for hard coating, and 50 weight parts of toluene were mixed to form a liquid dispersion of nanoparticles of the infrared absorbing material. The liquid dispersion of nanoparticles of the infrared absorbing material was applied to a polyethylene film including TiO₂ nanoparticles as a white-light reflecting material using a bar coater, and a film was formed. The film was dried for 30 seconds at 60°C to evaporate the solvent, and then cured using a high-pressure mercury lamp to obtain an infrared absorbing film having a high diffuse reflectance in the visible light region. The optical characteristics of this film are shown in FIG. 1.

### (Example 3)

Nanoparticles of W₁₈O₄₉ (specific surface area: 20 m²/g) in the amount of 10 weight parts, 80 weight parts of toluene, and 10 weight parts of a dispersing agent for dispersing nanoparticles were mixed together, dispersion was performed using a media stirring mill, and a liquid dispersion of W₁₈O₄₉ nanoparticles having an average dispersed grain size of 80 nm was created (solution C). This solution C in the amount of 75 weight parts, 45 weight parts of a UV-curable resin (solid content: 100%) for hard coating, and 120 weight parts of toluene were mixed to form a liquid dispersion of nanoparticles of the infrared absorbing material. The liquid dispersion of nanoparticles of the infrared absorbing material was applied to a polyethylene film including TiO₂ nanoparticles as a white-light reflecting material using a bar coater, and a film was formed. The film was dried for 30 seconds at 60°C to evaporate the solvent, and then cured using a high-pressure mercury lamp to obtain an infrared absorbing film having a high diffuse reflectance in the visible light region. The optical characteristics of this film are shown in FIG. 1.

### (Example 4)

Nanoparticles of Cs_{0.33}WO₃ (specific surface area: 20 m²/g) in the amount of 10 weight parts, 80 weight parts of toluene, and 10 weight parts of a dispersing agent for dispersing nanoparticles were mixed together, dispersion was performed using a media stirring mill, and a liquid dispersion of Cs_{0.33}WO₃ nanoparticles having an average dispersed grain size of 80 nm was created (solution A). The toluene in solution A was removed using a spray dryer, and a Cs_{0.33}WO₃ powder dispersion (powder A) was obtained.

The powder A thus obtained was added to polyethylene resin pellets and uniformly mixed in a blender, then melt-kneaded in a twin-screw extruder, and the extruded strand was cut into pellets to obtain a master batch including Cs_{0.33}WO₃.

A TiO₂-containing master batch was obtained by the same method.

The Cs_{0.33}WO₃-containing master batch and the TiO₂-containing master batch were mixed with a master batch prepared by the same method to which inorganic nanoparticles were not added. The mixed master batch was extrusion molded to form a film having a thickness of 50 µm. The optical characteristics of this film are shown in FIG. 1.

### (Example 5)

Nanoparticles of Cs_{0.33}WO₃ (specific surface area: 20 m²/g) in the amount of 10 weight parts, 80 weight parts of toluene, and 10 weight parts of a dispersing agent for dispersing nanoparticles were mixed together, dispersion was performed using a media stirring mill, and a liquid dispersion of Cs_{0.33}WO₃ nanoparticles having an average dispersed grain size of 80 nm was created (solution A). This solution A in the amount of 50 weight parts and 30 weight parts of a UV-curable resin (solid content: 100%) for hard coating were mixed to form a liquid dispersion of nanoparticles of the infrared absorbing material. A liquid dispersion of nanoparticles of a white-light reflecting material including TiO₂ nanoparticles was also obtained by the same method. The liquid dispersion of nanoparticles of the infrared absorbing material was applied to a polyethylene film using a bar coater, and a film was formed. This film was dried for 30 seconds at 60°C to evaporate the solvent, and then cured using a high-pressure mercury lamp. The nanoparticles of the white-light reflecting material were then applied to the other side of the polyethylene film using the same method to form a film, the film was cured, and an infrared absorbing film having a high diffuse reflectance in the visible light region was obtained. The optical characteristics of this film are shown in FIG. 1.

### (Comparative Example 1)

A polyethylene film including TiO₂ nanoparticles as the white-light reflecting material was obtained. The optical characteristics of this film are shown in FIG. 1.

### (Evaluation)

A comparison of Examples 1 through 5 with Comparative Example 1 showed that forming an infrared light absorbing layer formed by coating Cs_{0.33}WO₃, Rb_{0.33}WO₃, W₁₈O₄₉, and other tungsten oxide nanoparticles and composite tungsten oxide nanoparticles into a film in which a white-light reflecting material is dispersed into the film produced a significant increase in the absorption of infrared light by the film, and excellent visible light reflection and heat retention. In other words, the reflectance of visible light was maintained near 60 to 70 percent in Examples 1 through 5, and sunlight absorbance was enhanced to about 40 to 60 percent.

The agro-horticultural soil cover film of the present embodiment is a film having a white-light reflecting layer that includes a white-light reflecting material, and an infrared light absorbing layer that includes nanoparticles of an infrared absorbing material. Specifically, the agro-horticultural soil cover film of the present embodiment has a structure in which the white-light reflecting layer is a film into which a white-light reflecting material is dispersed, and the infrared light absorbing layer is formed by coating one side of the film with nanoparticles of an infrared absorbing material. Alternatively, the agro-horticultural soil cover film is a film in which a white-light reflecting material and nanoparticles of an infrared absorbing material are dispersed in a film to form a white-light reflecting layer and an infrared light absorbing layer. Alternatively, the agro-horticultural soil cover film is a film comprising a white-light reflecting layer formed by coating one side of a film with a white-light reflecting material, and an infrared light absorbing layer formed by coating the white-light reflection layer with nanoparticles of an infrared absorbing material; or a white-light reflecting layer formed by coating one side of a film with a white-light reflecting material, and an infrared light absorbing layer formed by coating the other side of the film with nanoparticles of an infrared absorbing material.

An infrared light absorbing layer that includes nanoparticles of an infrared absorbing material, preferably at least one of tungsten oxide nanoparticles and composite tungsten oxide nanoparticles, is formed by such a simple method as described above, whereby a durable, low-cost agro-horticultural soil cover film can be provided that reflects visible light rays and efficiently absorbs near-infrared rays from sunlight using a small amount of nanoparticles.

### BRIEF DESCRIPTION OF THE DRAWINGS

FIG. 1 is a table showing the optical characteristics of the films including TiO₂ nanoparticles and nanoparticles of the infrared absorbing material in Examples 1 through 5 and Comparative Example 1.

## Claims

1. An agro-horticultural soil cover film comprising: a white-light reflecting layer that includes a white-light reflecting material; and
an infrared light absorbing layer that includes nanoparticles of an infrared absorbing material, **characterized in that**
the nanoparticles of the infrared absorbing material are at least one of tungsten oxide nanoparticles and composite tungsten oxide nanoparticles,
the tungsten oxide nanoparticles are indicated by the general formula WOx (2.45 ≤ X ≤ 2.999),
the composite tungsten oxide nanoparticles are indicated by the general formula M_{Y}WO_{Z} (0.001 ≤ Y ≤ 1.0, 2.2 ≤ Z ≤ 3.0), and have a hexagonal crystal structure, and
the element M is at least one element selected from Cs, Rb, K, Tl, In, Ba, Li, Ca, Sr, Fe, and Sn.

2. The agro-horticultural soil cover film of claim 1, wherein
the white-light reflecting layer is a film into which a white-light reflecting material is dispersed; and
the infrared light absorbing layer is formed by coating one side of, the film with nanoparticles of an infrared absorbing material.

3. The agro-horticultural soil cover film of claim 1, wherein a white-light reflecting material and nanoparticles of an infrared absorbing material are dispersed in a film to form a white-light reflecting layer and an infrared light absorbing layer.

4. The agro-horticultural soil cover film of claim 1, comprising:
a white-light reflecting layer formed by coating one side of a film with a white-light reflecting material, and an infrared light absorbing layer formed by coating the white-light reflection layer with nanoparticles of an infrared absorbing material; or
a white-light reflecting layer formed by coating one side of a film with a white-light reflecting material, and an infrared light absorbing layer formed by coating the other side of the film with nanoparticles of an infrared absorbing material.

5. The agro-horticultural soil cover film of any of claims 1 through 4, wherein the white-light reflecting material is at least one material selected from TiO₂, ZrO₂, SiO₂, Al₂O₃, MgO, ZnO, CaCO₃, BaSO₄, ZnS, and PbCO₃.

6. The agro-horticultural soil cover film of any of claims 1 through 5, wherein the particle diameter of the nanoparticles of the infrared absorbing material is 1 nm to 800 nm.

7. The agro-horticultural soil cover film according to any one of claims 1 to 6, wherein the surfaces of the nanoparticles of the infrared absorbing material are coated by an oxide that includes at least one element selected from Si, Ti, Zr, and Al.

8. The agro-horticultural soil cover film according to any one of claims 1 to 7, wherein the film comprises at least one material selected from polyethylene, polypropylene, polyethylene terephthalate, polyvinyl fluoride, polyvinylidene fluoride, polytetrafluoroethylene, tetrafluoroethylene-ethylene copolymer, polychlorotrifluoroethylene, tetrachlorotrifluoroethylene, polyvinyl chloride, polyvinylidene chloride, polyvinyl alcohol, polystyrene, ethylene vinyl acetate, and polyester resin.

## Patentansprüche

1. Landwirtschaftlich-gartenbaulicher Bodenabdeckungsfilm, umfassend: eine weißes Licht reflektierende Schicht, die ein weißes Licht reflektierendes Material enthält; und
eine infrarotes Licht absorbierende Schicht, die Nanopartikel aus einem Infrarot-absorbierenden Material enthält, **dadurch gekennzeichnet, dass**
die Nanopartikel aus dem Infrarot-absorbierenden Material Wolframoxid-Nanopartikel und/oder Verbund-Wolframoxid-Nanopartikel sind,
die Wolframoxid-Nanopartikel durch die allgemeine Formel WOₓ(2,45 ≤ X ≤ 2,999) angegeben sind,
die Verbund-Wolframoxid-Nanopartikel durch die allgemeine Formal M_{y}WO_{z} (0,001 ≤ y ≤ 1,0, 2,2 ≤ Z ≤ 3,0) angegeben sind, und eine hexagonale Kristallstruktur haben, und
das Element M wenigstens ein Element ist ausgewählt aus Cs, Rb, K, TI, In, Ba, Li, Ca, Sr, Fe und Sn.

2. Landwirtschaftlich-gartenbaulicher Bodenabdeckungsfilm nach Anspruch 1, wobei
die weißes Licht reflektierende Schicht ein Film ist, in den ein weißes Licht reflektierendes Material dispergiert ist; und
die infrarotes Licht absorbierende Schicht durch Beschichten einer Seite des Films mit Nanopartikeln aus einem Infrarot-absorbierenden Material gebildet ist.

3. Landwirtschaftlich-gartenbaulicher Bodenabdeckungsfilm nach Anspruch 1, wobei ein weißes Licht reflektierendes Material und Nanopartikel aus einem Infrarot-absorbierenden Material in einem Film dispergiert sind, um eine weißes Licht reflektierende Schicht und eine infrarotes Licht absorbierende Schicht zu bilden.

4. Landwirtschaftlich-gartenbaulicher Bodenabdeckungsfilm nach Anspruch 1, umfassend:
eine weißes Licht reflektierende Schicht, die gebildet ist durch Beschichten einer Seite eines Films mit einem weißes Licht reflektierenden Material, und eine infrarotes Licht absorbierende Schicht, die gebildet ist durch Beschichten der weißes Licht reflektierenden Schicht mit Nanopartikeln aus einem Infrarot-absorbierenden Material; oder
eine weißes Licht reflektierende Schicht, die gebildet ist durch Beschichten einer Seite eines Films mit einem weißes Licht reflektierenden Material, und eine infrarotes Licht absorbierende Schicht, die gebildet ist durch Beschichten der anderen Seite des Films mit Nanopartikeln aus einem Infrarot-absorbierenden Material.

5. Landwirtschaftlich-gartenbaulicher Bodenabdeckungsfilm nach einem der Ansprüche 1 bis 4, wobei das weiße Licht reflektierende Material wenigstens ein Material ist ausgewählt aus TiO₂, ZrO₂, SiO₂, Al₂O₃, MgO, ZnO, CaCo₃, BaSO₄, ZnS, und PbCO₃.

6. Landwirtschaftlich-gartenbaulicher Bodenabdeckungsfilm nach einem der Ansprüche 1 bis 5, wobei der Partikeldurchmesser der Nanopartikel aus dem Infrarot-absorbierenden Material 1 nm bis 800 nm ist.

7. Landwirtschaftlich-gartenbaulicher Bodenabdeckungsfilm nach einem der Ansprüche 1 bis 6, wobei die Oberflächen der Nanopartikel aus dem Infrarotabsorbierenden Material durch ein Oxid beschichtet sind, das wenigstens ein Element enthält ausgewählt aus Si, Ti, Zr und Al.

8. Landwirtschaftlich-gartenbaulicher Bodenabdeckungsfilm nach einem der Ansprüche 1 bis 7, wobei der Film wenigstens ein Material umfasst ausgewählt aus Polyethylen, Polypropylen, Polyethylen-Terephthalat, Polyvinylfluorid, Polyvinyliden-Fluorid, Polytetrafluorethylen, Tetrafluorethylen-Ethylen-Copolymer, Polychlorotrifluorethylen, Tetrachlorotrifluorethylen, Polyvinylchlorid, Polyvinylidenchlorid, Polyvinylalkohol, Polystyrol, Ethylenvinylacetat und Polyesterharz.

## Revendications

1. Film de couverture du sol agro-horticole comprenant : une couche réfléchissant la lumière blanche qui inclut un matériau réfléchissant la lumière blanche ; et
une couche absorbant la lumière infrarouge qui inclut des nanoparticules d'un matériau absorbant l'infrarouge, **caractérisé en ce que**
les nanoparticules du matériau absorbant l'infrarouge sont au moins l'une parmi des nanoparticules d'oxyde de tungstène et des nanoparticules d'oxyde de tungstène composites,
les nanoparticules d'oxyde de tungstène sont indiquées par la formule générale WOx (2,45 ≤ X ≤ 2,999),
les nanoparticules d'oxyde de tungstène composites sont indiquées par la formule générale MyWOz (0,001 ≤ Y ≤ 1,0, 2,2 ≤ Z ≤ 3,0), et ont une structure cristallographique hexagonale, et
l'élément M est au moins un élément choisi parmi Cs, Rb, K, Tl, In, Ba, Li, Ca, Sr, Fe, et Sn.

2. Film de couverture du sol agro-horticole selon la revendication 1, dans lequel
la couche réfléchissant la lumière blanche est un film dans lequel un matériau réfléchissant la lumière blanche est dispersé ; et
la couche absorbant la lumière infrarouge est formée par revêtement d'un côté du film avec des nanoparticules d'un matériau absorbant l'infrarouge.

3. Film de couverture du sol agro-horticole selon la revendication 1, dans lequel un matériau réfléchissant la lumière blanche et des nanoparticules d'un matériau absorbant l'infrarouge sont dispersés dans un film pour former une couche réfléchissant la lumière blanche et une couche absorbant la lumière infrarouge.

4. Film de couverture du sol agro-horticole selon la revendication 1, comprenant :
une couche réfléchissant la lumière blanche formée par revêtement d'un côté d'un film avec un matériau réfléchissant la lumière blanche, et une couche absorbant la lumière infrarouge formée par revêtement de la couche réfléchissant la lumière blanche avec des nanoparticules d'un matériau absorbant l'infrarouge ; ou
une couche réfléchissant la lumière blanche formée par revêtement d'un côté d'un film avec un matériau réfléchissant la lumière blanche, et une couche absorbant la lumière infrarouge formée par revêtement de l'autre côté du film avec des nanoparticules d'un matériau absorbant l'infrarouge.

5. Film de couverture du sol agro-horticole selon l'une quelconque des revendications 1 à 4, dans lequel le matériau réfléchissant la lumière blanche est au moins un matériau choisi parmi TiO₂, ZrO₂, SiO₂, Al₂O₃, MgO, ZnO, CaCO₃, BaSO₄, ZnS, et PbCO₃.

6. Film de couverture du sol agro-horticole selon l'une quelconque des revendications 1 à 5, dans lequel le diamètre de particule des nanoparticules du matériau absorbant l'infrarouge est de 1 nm à 800 nm.

7. Film de couverture du sol agro-horticole selon l'une quelconque des revendications 1 à 6, dans lequel les surfaces des nanoparticules du matériau absorbant l'infrarouge sont revêtues par un oxyde qui inclut au moins un élément choisi parmi Si, Ti, Zr, et Al.

8. Film de couverture du sol agro-horticole selon l'une quelconque des revendications 1 à 7, dans lequel le film comprend au moins un matériau choisi parmi le polyéthylène, le polypropylène, le poly(téréphtalate d'éthylène), le poly(fluorure de vinyle), le poly(fluorure de vinylidène), le polytétrafluoroéthylène, un copolymère de tétrafluoroéthylène-éthylène, le polychlorotrifluoroéthylène, le tétrachlorotrifluoroéthylène, le poly(chlorure de vinyle), le poly(chlorure de vinylidène), le poly(alcool vinylique), le polystyrène, l'éthylène-acétate de vinyle, et une résine de polyester.
